# EUROPÄISCHE PATENTSCHRIFT

(11) **EP 1 024 161 B1**
(45) Veröffentlichungstag und Bekanntmachung des Hinweises auf die Patenterteilung: **15.03.2006**
(21) Anmeldenummer: 99126256.9
(22) Anmeldetag: 31.12.1999
(51) Int. Cl.: C08J 5/12, A47J 45/07, A47J 45/06

(54) **Verfahren zum Befestigen von Kunststoffteilen an Kannen**
Method for securing of plastic parts to jugs
Procédé d'adhésion d'éléments en plastique sur des pots

(30) Priorität: 29.01.1999 DE 19903479
(43) Veröffentlichungstag der Anmeldung: 02.08.2000
(73) Patentinhaber: Schott AG, 55122 Mainz (DE)
(72) Erfinder: Fischer, Wolfgang, 55120 Mainz (DE); Kopp, Bernd, 55126 Mainz (DE); Henze, Inka, Dr., 55288 Udenheim (DE); Krick, Guido, 55411 Bingen (DE)
(74) Vertreter: Fuchs Mehler Weiss & Fritzsche

(56) Entgegenhaltungen:
- WO-A-97/02310
- DE-A- 4 407 478
- DE-B- 1 053 773

## Beschreibung

Die Erfindung betrifft ein Verfahren zum Befestigen von Kunststoffteilen wie Griffe und/oder den oberen Rand von Kannen umfassenden Kunststoffränder mit oder ohne Ausgußtülle aus Polypropylen an Glaskannen mittels eines Klebers. Die Erfindung betrifft auch eine Kanne gemäß dem Oberbegriff nach Anspruch 19.

Glaskannen, die als Servier- und Auffangbehälter für kalte und heiße Getränke (beispielsweise Kaffee) oder auch zu deren Zubereitung verwendet werden, werden zur Verminderung der Bruchanfälligkeit beim Anstoßen am Kannenhals mit einem Kunststoffrand versehen. Zum Halten von Kannen, auch wenn sie mit heißen Getränken gefüllt sind, werden in der Regel Kunststoffgriffe verwendet, die entweder eigenständiger Bestandteil der Kanne sind oder im Kunststoffrand integriert sind.

Ein gut klebbarer und kostengünstiger Kunststoff ist Acrylnitril-Sutadien-Styrol-Copolymer (im folgenden ABS genannt). Mehrere ABS-Varianten sind vom Bundesgesundheitsamt und der Food and Drug Agency (USA) zugelassen, so daß auch der Kunststoffrand, der unmittelbar mit dem Getränk in Berührung kommt, aus ABS hergestellt werden könnte. Die zugelassenen ABS-Varianten halten zwar den Temperaturen in gewöhnlichen Haushaltsgeschirrspülmaschinen stand, zeigen jedoch Verformungen und Verfärbungen beim Reinigen in Industriespülmaschinen.

Polypropylen ist aus wirtschaftlichen und gesundheitsrechtlichen Gründen dem ABS vorzuziehen. Außerdem erfüllt Polypropylen die Anforderungen an Form-und Farbstabilität bei Temperaturen von 90°C und höher.

Bei Gebrauchstemperaturen von 90°C und höher ist allerdings die Haftfestigkeit zu gering, so daß ein Adhäsionsbruch auftritt, d.h. der Riß verläuft zwischen Kleber und Kunststoffteil. Gebrauchstemperaturen von 90°C und höher treten z.B. in Industriespülmaschinen für den gewerblichen Bereich auf.

Eigenständige Griffe sind nur geklebt. Kunststoffränder u.a., wenn sie aus Polypropylen sind, weisen an ihrem unteren Rand eine umlaufende Nut auf, mittels derer sie klemmend auf dem Glaskannenrand aufsitzen, und sind zusätzlich durch Kleber, der in die Nut eingefügt wird, gesichert. Der Kleber hat hier in erster Linie die Funktion, die Freiräume zwischen dem Glaskannenrand und der Nut des Kunststoffrandes zu füllen. Die Kraftübertragung wird hauptsächlich mechanisch bewerkstelligt. Im allgemeinen wird bei ABS eine Haftung ausreichender Festigkeit zwischen Kunststoffteil und Glaskanne durch Silikonzweikomponentenkleber und dem zusätzlichen Einsatz von chemischen Haftvermittlern (Primer) erreicht. So wird bei einer Überbelastung der Verklebung ein Kohäsionsbruchbild erhalten, bei dem der Riß durch den Kleber geht.

Bei Kunststoffändern hat der Kleber auch Dichtfunktion, um zu verhindern, daß die Flüssigkeit zwischen Glaskannenrand und Kunststoffrand ausläuft. Zu diesem Zweck können auch Dichtringe verwendet werden. Allerdings werden in diesem Fall üblicherweise zwei separate Kunststoffteile, die miteinander verhaken, als Kunststoffrand verwendet. Dies ist aufwendiger und teurer als ein einteiliger Kunststoffrand.

Aus der Schrift EP 0 413 196 B1 ist eine Kanne bekannt, bei der der Griff nicht in den Kunststoffrand integriert ist, sondern beide Teile eigenständige Bestandteile der Kanne sind. Der Griff ist einerseits an der Außenseite der Kanne befestigt, andererseits ist er formschlüssig mit dem Kunststoffrand verbunden. Diese formschlüssige Verbindung befindet sich gegenüber einer in den Kunststoffrand eingearbeiteten Ausgußtülle. Der Kunststoffrand und der Griff müssen daher komplexer Gestalt sein, was die Herstellung und Montage erschwert und verteuert. Über die Resistenz der Haftverbindung gegenüber hohen Gebrauchstemperaturen wird keine Aussage gemacht.

Das Problem beim Kleben von Polypropylen liegt darin, daß Polypropylen unpolar ist und sich von Mitteln wie z.B. guten Klebstoffen für Glas, die polarer als Polypropylen sind, schlecht benetzen läßt. Aus den Proceedings zum 11. Fachforum, Neue Oberflächen für Kunststoffe - Vorbehandlung und Beschichtung -, Regensburg, 23./24. September 1998 sind diverse Möglichkeiten der Oberflächenbehandlung bekannt, die den Oberflächen der unpolaren Materialien polare Eigenschaften verleihen. Dazu zählen auch die Plasmapolymerisation (a. a. O., S. 179ff) und das Gasbeflammen (a. a. O., S. 210ff). Die Plasmapolymerisation beruht darauf, mittels eines Plasmas ausgewählter Atmosphäre auf einem Substrat eine Polymerschicht mit polaren funktionellen Gruppen abzuscheiden. Bei der Gasbeflammung wird zum einen die Oberfläche oxidiert, zum anderen durch die in der Flamme enthaltenen Ionen und Elektronen die Oberfläche polarisiert.

Thema des Artikels "Kleben von Kunststoffen", der in der Zeitschrift Kunststoffberater 7/8/1982 erschienen ist, ist, daß schwierig klebbare Kunststoffe vorbehandelt werden müssen. Zu den schwierig klebbaren Kunststoffen wird insbesondere Polypropylen gezählt. Die für Polypropylen propagierten Vorbehandlungen sind chemischer Art, z.B. durch Beizen in Chromschwefelsäure, thermischer Art, z.B. durch Gasbeflammung, oder elektrischer Art, z.B. durch Koronaentladung. Es wird das Verkleben von Kunststoffen miteinander abgehandelt. Das Kleben von Kunststoff auf Glas wird nicht erwähnt.

In dem Artikel "Kleben von Kunststoffen nach Vorbehandlung in Niederdruckplasma", erschienen in der Zeitschrift Kunststoffe 73 (1983) 3, wird am Beispiel Stahl-Kunststoff dargelegt, daß u.a. beim Polypropylen die Klebfähigkeit nach Vorbehandlung im Niederdruckplasma zunimmt. Dieser Effekt hält für einige bis mehrere Tage an. Eines der vorgeschlagenen Prozeßgase für die Niederplasmaaktivierung ist Sauerstoff. Auch in dieser Schrift wird auf das Kleben von Kunststoff auf Glas nicht eingegangen.

Die WO 97/02310 A1 erläutert die Erhöhung der Hafteigenschaften von Polyethylen-Folien durch flächendeckendes, intermittierendes Beflammen vor einem Bedrucken oder anderem Omamentieren.

Die DE 44 07 478 A1 beschreibt ein Fügeverfahren für Teile aus faserverstärktem Kunststoff, z.B. aus PEEK (= Polyetheretherketon) mit Kohlenstoffasem. Nachdem die Oberflächenbehandlungen, die bei Kleben von Metall verwendet werden, zu keinem Erfolg geführt haben, wurde durch eine Niederdruckplasmabehandlung eine Adhäsionsverbesserung erreicht. Das Kleben kann dann mit den üblichen Metallklebstoffen erfolgen.

Die DE-AS 1 053 773 befaßt sich mit einer permanenten Erhöhung der Hafteigenschaften von Polyäthylenharz-Kunststoffen. Dabei wurde gefunden, daß eine Oberflächenbehandlung nur durch z.B. Beflammen oder eine Plasmabehandlung in ihrer Wirkung nicht ausreicht. Deshalb muß die Oberfläche zusätzlich mit einer Substanz behandelt werden, die multifunktionale Aminogruppen aufweist.

Im zitierten Stand der Technik lassen sich keinerlei Hinweise darauf finden, wie man die Haftfestigkeit von Klebeverbindungen für Gebrauchstemperaturen von 90°C und höher verbessern könnte.

Der Erfindung liegt die Aufgabe zugrunde, ein Verfahren für das Befestigen von Polypropylen auf Glas mittels eines Klebers zu finden, um eine hinreichende Haftfestigkeit, auch für Gebrauchstemperaturen von 90°C und höher zu finden.

Diese Aufgabe wird erfindungsgemäß durch zwei Verfahren zum Befestigen von Kunststoffteilen, wie Griffe oder den oberen Rand von Kannen umfassende Kunststoffränder mit oder ohne Ausgußtülle aus Polypropylen an Glaskannen mittels eines Klebers gelöst, bei dem vor dem Aufbringen des Klebers das Kunststoffteil mindestens an der Klebestelle oberflächenaktiviert wird. Die Oberflächenaktivierung wird entweder in einem Niederdruckplasma oder durch Beflammen durchgeführt.

Durch die Oberflächenaktivierung der Polypropylenteile vor dem Kleben wird die Oberfläche polarer. Somit erhöht sich die Benetzbarkeit der Oberfläche für Klebstoffe und daher auch die Haftfestigkeit der Verbindung zwischen Polypropylen und Kleber. Es hat sich gezeigt, daß diese erhöhte Haftfestigkeit auch bei höheren Temperaturen bestehen bleibt, so daß auch bei höheren Gebrauchstemperaturen ein plötzliches Loslösen der Glaskanne vom Kunststoffteil während der Benutzung nicht mehr auftritt.

Das erste erfindungsgemäße Verfahren beruht auf der Oberflächenaktivierung in einem Niederdruckplasma. Die Niederdruckplasmen werden durch Einwirken elektrischer Felder hinreichender Stärke auf ein Gas bei niedrigem Druck erzeugt. Die unter Einfluß der elektrischen Felder eintretende Ionisation führt dazu, daß elektrisch neutrale Gasatome durch die Energieanregung in Elektronen und positiv geladene Ionen aufgespalten werden. Da im Plasma die gleiche Anzahl positiver und negativer Ladungsträger vorliegt, ist es zwar nach außen elektrisch neutral, besitzt aber dennoch eine elektrische Leitfähigkeit. Der Aufprall von Plasmateilchen auf oberflächennahe Atome oder Moleküle der vorzubehandelnden Fügeteile führt zu einer Aktivierung der Oberfläche.

Für die Oberflächenaktivierung von Polypropylen zum Kleben auf Glas hat es sich als vorteilhaft erwiesen, bei Drücken zwischen 10 Pa und 500 Pa zu arbeiten.

Je nach Zusammensetzung des Prozeßgases kommt es zu einer chemischen Veränderung der Oberfläche. Ein sowohl reinigender als auch aktivierender Effekt kann mit dem Plasma unter Verwendung von Sauerstoff oder sauerstoffhaltigen Gasgemischen, im einfachsten Fall Luft, erzielt werden. Hierbei werden bei geeigneter Prozeßführung organische Beläge zu Wasser und Kohlendioxid umgesetzt und anschließend sauerstoffhaltige, polare funktionelle Gruppen an den Ketten der so gereinigten Kunststoffoberfläche fixiert. Für die Benetzungseigenschaften wichtige funktionelle Gruppen sind Carbonyl-, Carboxyl-, Hydroxy- und ggf. Peroxidgruppen.

Zur Erhöhung der Haftfestigkeit wird vorzugsweise das im Niederdruckplasma aktivierte Kunststoffteil oder Griff vor dem Aufbringen des Klebers zusätzlich mit einer chemischen Haftvermittlerschicht (Primer) versehen. Das Auftragen eines chemischen Haftvermittlers hat zusätzlich die Funktion, die zu klebende Oberfläche von durch z.B. beim Handling auftretendem Staub, Fett und anderen eventuellen Fremdkörpern zu reinigen.

Nach der Aktivierung im Niederdruckplasma besteht die Möglichkeit, die Polypropylenteile einige Tage bis Wochen zu lagern, bevor sie weiterverarbeitet werden, ohne daß die Haftfestigkeit der späteren Verbindung verloren geht. Dies ist prozeßtechnisch ein großer Vorteil, da so der Ort der Aktivierung und der Ort der Weiterverarbeitung räumlich voneinander getrennt sein können und daher die hohen Investitionskosten für den Aufbau einer Prozeßstraße mit integrierten Plasmareaktoren vermieden werden können.

Bei der großflächigen Aktivierung der Polypropylen-Oberfläche ist zu beachten, daß die Benetzbarkeit am Gießrand unter Umständen so sehr erhöht wird, daß die Flüssigkeit beim Ausgießen über den ganzen Rand verläuft. Durch gezielten Schutz der nicht zu behandelnden Stellen kann dieses Verhalten gezielt und leicht unterbunden werden.

Das zweite erfindungsgemäße Verfahren beruht auf der Oberflächenaktivierung durch Beflammen. Durch die Oxidation und den Eintrag von Elektronen und Ionen entstehen somit in der ursprünglich unpolaren Oberfläche des Polypropylen-Kunststoffteils polare Moleküle, welche wiederum den Klebstoffnnolekülen die Möglichkeit zur Anbindung bieten.

Ein großer Vorteil des Beflammens besteht darin, daß es mit dieser Art der Oberflächenaktivierung möglich ist, gezielt nur die Klebstelle zu aktivieren. Bei einem Kunststoffrand beispielsweise würden nur die Stege und der Bodenbelag der umlaufenden Nut aktiviert werden, was die für das GieBverhalten positive schlechte Benetzbarkeit der Ausgießtülle des Polypropylen-Kunststoffrandes erhalten würde.

Vorzugsweise wird für das Beflammen ein Gasbrenner verwendet. Da darüber hinaus keinerlei spezielle Behandlungswerkzeuge benötigt werden, ist diese bevorzugte Ausführungsform des Verfahrens außerordentlich einfach und kostengünstig.

Die resultierenden Eigenschaften der aktivierten Polypropylenoberfläche hängen entscheidend von der Flammencharakteristik ab, das heißt von Temperatur, Ionenverteilung und Größe des aktiven Bereichs. Der aktive Bereich ist der oxidierende Bereich, der als dunkelblaue Hüllflamme dem Auge sichtbar ist. Der hellblaue Flammenkegel ist stark reduzierend und daher für die Oberflächenaktivierung unbrauchbar. Innerhalb des oxidierenden Bereichs sind Temperatur und Ionendichte unterschiedlich verteilt. Außerdem hängen die resultierende Eigenschaften von der Intensität der Wechselwirkung mit der Oberdäche ab, die vom Abstand Brenner - Kunststoffoberfläche und der Einwirkzeit mitbestimmt wird.

Eine für das Oberflächenaktivieren von Polypropylenen optimale Flammencharakteristik erhält man mit einem Luft-Gasgemisch aus 8-12 Vol.-Teilen und 1 Vol.-Teil Erdgas. Luft und Erdgas sind außerdem überall zu minimalen Kosten verfügbar.

Als vorteilhaft beim Beflammen von Kunststoffrändern und Griffen aus Polypropylen hat sich ein Abstand des Brenners von der Kunststoffoberfläche von 70 bis 100 mm herausgestellt. Damit ist gewährleistet, daß die Oberfläche immer mit dem Flammenbereich günstiger Temperatur, Ioneadichte und damit oxidierender Wirkung in Berührung ist.

Sind einmal alle statischen Parameter optimiert, muß die bevorzugte Einwirkzeit bestimmt werden und eine Möglichkeit sie zu regeln. In einer möglichen Durchführungsart werden zur Regelung der Einwirkzeit Brenner und Kunststoffteil relativ zueinander bewegt. Vorzugsweise ist dabei der Brenner befestigt und das zu behandelnde Kunststoffteil wird bewegt.

Es hat sich gezeigt, daß dabei die Relativgeschwindigkeiten mit den besten Aktivierungsergebnissen zwischen 300 mm/s und 600 mm/s liegen. Bei Relativgeschwindigkeiten in diesem Bereich wird vermieden, daß einerseits das Polypropylen überhitzt wird oder anschmilzt, andererseits die Einwirkzeit zu kurz ist, um die Oberflächen zu aktivieren.

Für das gezielte Aktivieren bestimmter Flächen hat sich erstaunlicherweise herausgestellt, daß es sich am präzisesten bewerkstelligen läßt, wenn die Flamme oberhalb der zu aktivierenden Oberfläche positioniert ist und beispielsweise bei nutähnlichen Formen wie bei Kunststoffträndem gewissermaßen von oben her in die Nut hineinflammt.

Weiter läßt sich die Präzision beim Beflammen definierter und genau begrenzter Oberflächen erhöhen, indem man Gasbrenner mit runder Düse einsetzt, so daß man eine lange, spitz zulaufende Flamme mit rundem horizontalen Querschnitt erhält.

Wenn es sich um einen Kunststoffrand handelt, der mittels einer den oberen Rand der Glaskanne umgreifenden Nut befestigt wird, kann der Grad der Aktivierung bestimmter Bereiche dadurch gesteuert werden, daß man entweder den Anstellwinkel des Gasbrenners als ungefähr 0° Grad zum Lot auf die Bodenfläche der Nut wählt und beide Stege gleichermaßen beflammt oder den Gasbrenner vom Lot weg leicht neigt (bis etwa 15°) und so überwiegend die Bodenfläche und den äußeren Steg beflammt, die verglichen mit dem inneren Steg der umflaufenden Nut stärker belastet werden und daher einer höheren Haftfestigkeit bedürfen.

Ein prozeßtechnischer großer Vorteil ist, daß, da keine aufwendigen Vorrichtungen benötigt werden, das Beflammen ohne weiteren Aufwand in den Herstellungsprozeß integriert werden kann und daher das Kunststoffteil unmittelbar nach dem Beflammen weiterverarbeitet, z.B. mit einem chemischen Haftvermittler (Primer) versehen werden kann. Die Investitionskosten für das Umstellen von rein geklebten Griffen und Kunststoffrändern aus Polypropylen auf beflammte Griffe und Kunststoffränder ist also minimal.

Ein letzter, aber um so bedeutenderer Vorteil des Beflammens ist, daß man hinreichende Haftfestigkeiten auch für Gebrauchstemperaturen von 90° C und höher erreichen kann, ohne auf zusätzliche chemische Haftvermittler (Primer) zurückgreifen zu müssen. Da bisher das Auftragen von chemischen Haftvermittlern in Handarbeit geschah, bedeutet dies einen großen Zeitgewinn der Herstellung und auch eine immense Kostenreduzierung. Außerdem werden für chemische Haftvermittler große Mengen organischer Lösungsmittel verwendet, die eine Belastung der Umwelt und der Gesundheit der Arbeiter darstellen und hiermit vermieden werden können.

Bestandteil der Erfindung ist auch eine Kanne aus Glas mit Kunststoffteilen, wie Griffe und/oder den oberen Rand von Kannen umfassende Kunststoffränder mit oder ohne Ausgußtülle, die aus oberflächenaktiviertem Polypropylen bestehen.

Im Folgenden wird ein Ausführungsbeispiel der Erfindung anhand der Zeichnungen näher erläutert. Dabei zeigen:
- Fig. 1: Kunststoffrand mit Nut während des Beflammens.
- Fig. 2: Schnitt durch Nut und Gasbrennerflamme.

Die Zeichnungen sind nicht maßstäblich, sondern sollen das Prinzip der Ausführung darstellen.

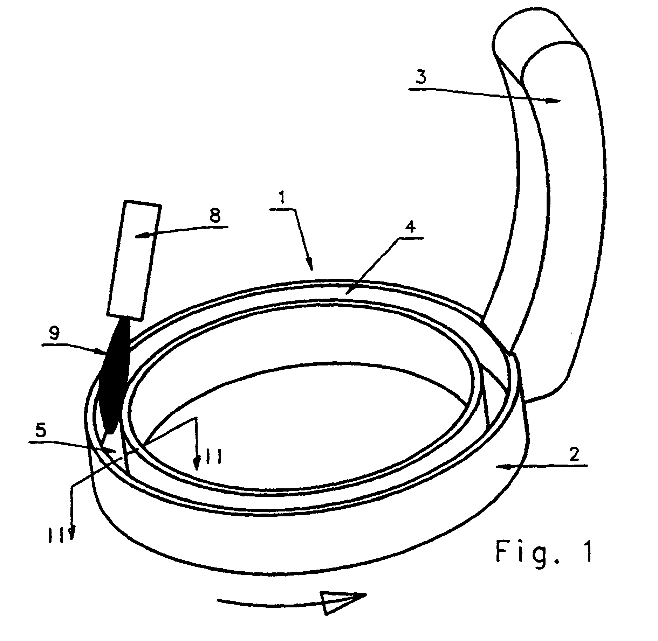

In Fig. 1 ist ein Kunststoffteil 1 während des Beflammens dargestellt. Bei dem Kunststoffteil 1 handelt es sich um einen Kunststoffrand 2 mit integriertem Griff 3 und umlaufender Nut 4, die so dimensioniert ist, daß sie genau den oberen Rand der Glaskanne umfaßt. In dieser Nut 4 wird der Kleber eingebracht werden. Davor muß die Nut 4 oberflächenaktiviert werden, was durch Beflammen mittels eines Gasbrenners 8 und seiner Flamme 9 geschieht. Während des Beflammens bleibt der Gasbrenner 8 in einer bestimmten Position, in diesem Beispiel oberhalb des Kunststoffrandes 2. Der Kunststoffrand 2 hingegen wird auf solche Weise unter dem Gasbrenner 8 herumgedreht (der Drehsinn wird durch den Pfeil angegeben), daß die Flamme 9 genau das Innere der Nut 4 abfährt und dabei beflammt. Der Brenner 8 wurde dafür so gewählt, daß die Flamme 9 einen horizontalen runden Querschnitt aufweist, damit zielgerichtet nur die Nut 4 beflammt wird.

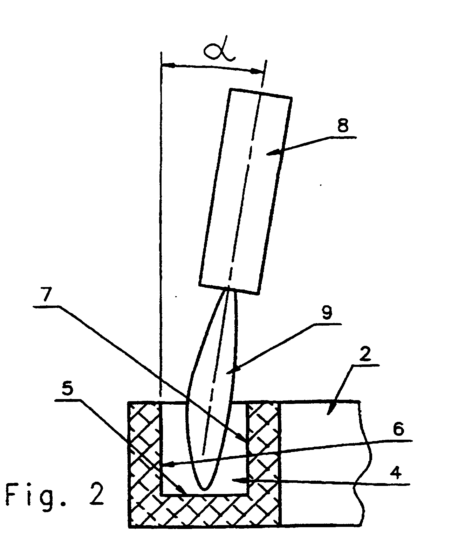

In Figur 2 ist ein Schnitt durch die Nut 4 und den Gasbrenner 8 sowie die Flamme 9 längs der Linie II-II in Figur 1 dargestellt, um die Position des Gasbrenners 8 sowie der Flamme 9 relativ zu beflammende Nut 4 zu illustrieren. In diesem speziellen Ausführungsbeispiel sollen vor allem die außenliegende Seitefläche 6 und die Grundfläche 5 der Nut 4 oberflächenaktiviert werden, da die Kräfte, die beim Heben und Tragen der Kanne gegen die Verbindung wirken, eher an ihnen als an der innenliegenden Seitenfläche 7 angreifen. Zu diesem Zweck ist die Flamme 9 nicht senkrecht zur Grundfläche 5 der Nut 4 ausgerichtet, sondern unter einem Winkel α zum Lot auf die Grundfläche 5.

### Bezugszeichen

- 1: Kunststoffteil
- 2: Kunststoffrand
- 3: Griff
- 4: Nut
- 5: Grundfläche
- 6: außenliegende Seitenfläche
- 7: innenliegende Seitenfläche
- 8: Gasbrenner
- 9: Flamme
- →: Drehrichtung

## Patentansprüche

1. Verfahren zum Befestigen von Kunststoffteilen wie Griffen und/oder den oberen Rand von Kannen umfassenden Kunststoffrändern mit oder ohne Ausgußtülle aus Polypropylen an Glaskannen mittels eines Klebers, **dadurch gekennzeichnet, daß** vor dem Aufbringen des Klebers das Kunststoffteil mindestens an der Klebstelle in einem Niederdruckplasma oberflächenaktiviert wird.

2. Verfahren nach Anspruch 1, **dadurch gekennzeichnet, daß** das Niederdruckplasma bei einem Druck von 10-500 Pa erzeugt wird.

3. Verfahren nach Anspruch 1 oder 2, **dadurch gekennzeichnet, daß** das Niederdruckplasma unter Verwendung von Sauerstoff oder einem sauerstoffhaltigen Gasgemisch erzeugt wird.

4. Verfahren nach mindestens einem der Ansprüche 1 bis 3, **dadurch gekennzeichnet, daß** nach der Oberflächenaktivierung im Niederdruckplasma und vor dem Aufbringen des Klebers ein chemischer Haftvermittler (Primer) auf das Kunststoffteil aufgebracht wird.

5. Verfahren nach mindestens einem der Ansprüche 1 bis 4, **dadurch gekennzeichnet, daß** zwischen Niederdruckplasmaaktivierung und Kleben einige Tage bis Wochen liegen.

6. Verfahren zum Befestigen von Kunststoffteilen wie Griffen und/oder den oberen Rand von Kannen umfassenden Kunststoffrändern mit oder ohne Ausgußtülle aus Polypropylen an Glaskannen mittels eines Klebers, **dadurch gekennzeichnet, daß** vor dem Aufbringen des Klebers das Kunststoffteil mindestens an der Klebestelle durch Beflammen oberflächenaktiviert wird.

7. Verfahren nach Anspruch 6, **dadurch gekennzeichnet, daß** das Kunststoffteil gezielt nur an der Klebstelle beflammt wird.

8. Verfahren nach Anspruch 6 oder 7, **dadurch gekennzeichnet, daß** zum Beflammen ein Gasbrenner verwendet wird.

9. Verfahren nach mindestens einem der Ansprüche 6 bis 8, **dadurch gekennzeichnet, daß** dem Gasbrenner ein Luft-Gasgemisch aus 8 bis 12 Vol.-Teilen Luft und 1 Vol.-Teil Erdgas zugeführt wird.

10. Verfahren nach mindestens einem der Ansprüche 6 bis 9, **dadurch gekennzeichnet, daß** der Abstand zwischen Gasbrenner und Griff bzw. Schüttrand auf 70 bis 100 mm eingestellt wird.

11. Verfahren nach einem der Ansprüche 6 bis 10, **dadurch gekennzeichnet, daß** das Kunststoffteil relativ zum feststehenden Gasbrenner bewegt wird.

12. Verfahren nach Anspruch 11, **dadurch gekennzeichnet, daß** die Relativgeschwindigkeit zwischen Kunststoffteil und Gasbrenner 300 bis 600 mm/s beträgt.

13. Verfahren nach mindestens einem der Ansprüche 6 bis 12, **dadurch gekennzeichnet, daß** die Flamme des Gasbrenners oberhalb der zu aktivierenden Oberfläche des Kunststoffteils positioniert wird.

14. Verfahren nach mindestens einem der Ansprüche 6 bis 13, **dadurch gekennzeichnet, daß** ein Gasbrenner mit einer Flamme mit rundem horizontalen Querschnitt verwendet wird.

15. Verfahren nach mindestens einem der Ansprüche 6 bis 14 bei dem ein Kunststoffrand mit einer den oberen Rand der Kanne umgreifenden Nut befestigt wird, **dadurch gekennzeichnet, daß** der Anstellwinkel des Gasbrenners zwischen 0° bis 15° zum Lot auf die Grundfläche der Nut gewählt wird.

16. Verfahren nach Anspruch 15, **dadurch gekennzeichnet, daß** nur die Grundfläche und die außenliegende Seitenfläche der Nut beflammt werden.

17. Verfahren nach mindestens einem der Ansprüche 6 bis 16, **dadurch gekennzeichnet, daß** das Kunststoffteil unmittelbar nach dem Beflammen weiterverarbeitet wird.

18. Verfahren nach mindestens einem der Ansprüche 6 bis 17, **dadurch gekennzeichnet, daß** das Kunststoffteil nach dem Beflammen ohne Zuhilfenahme eines zusätzlichen chemischen Haftvermittlers (Primers) geklebt wird.

19. Kanne aus Glas mit Kunststoffteilen wie Griffen und/oder den oberen Rand von Kannen umfassenden Kunststoffrändern mit oder ohne Ausgußtülle, **dadurch gekennzeichnet, daß** das Kunststoffteil aus oberflächenaktiviertem Polypropylen besteht.

## Claims

1. Method of attaching plastic parts made of polypropylene, such as handles and/or spouted or spoutless plastic rims encircling the top edge of pots, to glass pots by means of an adhesive, **characterized in that** before the adhesive is applied the plastic part, at least at the adhesive bond site, is surface-activated in a low-pressure plasma.

2. Method according to Claim 1, **characterized in that** the low-pressure plasma is generated at a pressure of 10-500 Pa.

3. Method according to Claim 1 or 2, **characterized in that** the low-pressure plasma is generated using oxygen or an oxygen-containing gas mixture.

4. Method according to at least one of Claims 1 to 3, **characterized in that** following surface activation in the low-pressure plasma and before application of the adhesive a chemical adhesion promoter (primer) is applied to the plastic part.

5. Method according to at least one of Claims 1 to 4, **characterized in that** several days to weeks lie between low-pressure plasma activation and adhesive bonding.

6. Method of attaching plastic parts made of polypropylene, such as handles and/or spouted or spoutless plastic rims encircling the top edge of pots, to glass pots by means of an adhesive, **characterized in that** before the adhesive is applied the plastic part, at least at the adhesive bond site, is surface-activated by flaming.

7. Method according to Claim 6, **characterized in that** the plastic part is flamed specifically only at the adhesive bond site.

8. Method according to Claim 6 or 7, **characterized in that** flaming is carried out using a gas burner.

9. Method according to at least one of Claims 6 to 8, **characterized in that** the gas burner is fed with an air/gas mixture composed of 8 to 12 parts by volume air and 1 part by volume natural gas.

10. Method according to at least one of Claims 6 to 9, **characterized in that** the distance between gas burner and handle or pour rim is set at 70 to 100 mm.

11. Method according to one of Claims 6 to 10, **characterized in that** the plastic part is moved relative to the stationary gas burner.

12. Method according to Claim 11, **characterized in that** the relative speed between plastic part and gas burner is 300 to 600 mm/s.

13. Method according to at least one of Claims 6 to 12, **characterized in that** the flame of the gas burner is positioned above the plastic part surface to be activated.

14. Method according to at least one of Claims 6 to 13, **characterized in that** a gas burner having a flame with a circular horizontal crosssection is used.

15. Method according to at least one of Claims 6 to 14, in which a plastic rim is attached to a groove engaging around the top edge of the pot, **characterized in that** the selected pitch angle of the gas burner is between 0° to 15° to the perpendicular onto the base area of the groove.

16. Method according to Claim 15, **characterized in that** only the base area and the outer side area of the groove are flamed.

17. Method according to at least one of Claims 6 to 16, **characterized in that** the plastic part is processed further immediately after flaming.

18. Method according to at least one of Claims 6 to 17, **characterized in that** after it has been flamed the plastic part is adhered without the assistance of an additional chemical adhesion promoter (primer).

19. Pot made of glass with plastic parts such as handles and/or spouted or spoutless plastic rims encircling the top edge of pots, **characterized in that** the plastic part is composed of surface-activated polypropylene.

## Revendications

1. Procédé de fixation d'éléments en plastique tels que des poignées et/ou des bords en plastique enserrant le bord supérieur de pots avec ou sans bec verseur en polypropylène sur des pots en verre au moyen d'un adhésif, **caractérisé en ce qu'**avant l'application de l'adhésif, l'élément en plastique est activé en surface au moins à l'emplacement de l'adhésif dans un plasma à basse pression.

2. Procédé selon la revendication 1, **caractérisé en ce que** le plasma à basse pression est produit à une pression de 10-500 Pa.

3. Procédé selon la revendication 1 ou 2, **caractérisé en ce que** le plasma à basse pression est produit en utilisant de l'oxygène ou un mélange de gaz contenant de l'oxygène.

4. Procédé selon au moins l'une quelconque des revendications 1 à 3, **caractérisé en ce qu'**après l'activation en surface dans le plasma à basse pression et avant l'application de l'adhésif, un promoteur d'adhésion chimique (primer) est appliqué sur l'élément en plastique.

5. Procédé selon au moins l'une quelconque des revendications 1 à 4, **caractérisé en ce qu'**entre l'activation du plasma à basse pression et le collage s'écoulent quelques jours à quelques semaines.

6. Procédé de fixation d'éléments en plastique tels que des poignées et/ou des bords en plastique enserrant le bord supérieur de pots avec ou sans bec verseur en polypropylène sur des pots en verre au moyen d'un adhésif, **caractérisé en ce qu'**avant l'application de l'adhésif, l'élément en plastique est activé en surface au moins à l'emplacement de l'adhésif en l'enflammant.

7. Procédé selon la revendication 6, **caractérisé en ce que** l'élément en plastique est enflammé de manière ciblée uniquement à l'emplacement de l'adhésif.

8. Procédé selon la revendication 6 ou 7, **caractérisé en ce que** pour l'inflammation on utilise un brûleur à gaz.

9. Procédé selon au moins l'une quelconque des revendications 6 à 8, **caractérisé en ce que** l'on amène au brûleur à gaz un mélange d'air et de gaz constitué de 8 à 12 parties en volume d'air et de 1 partie en volume de gaz naturel.

10. Procédé selon au moins l'une quelconque des revendications 6 à 9, **caractérisé en ce que** la distance entre le brûleur à gaz et la poignée ou le bord verseur est ajustée à 70 à 100 mm.

11. Procédé selon l'une quelconque des revendications 6 à 10, **caractérisé en ce que** l'élément en plastique est déplacé par rapport au brûleur à gaz fixe.

12. Procédé selon la revendication 11, **caractérisé en ce que** la vitesse relative entre l'élément en plastique et le brûleur à gaz est de 300 à 600 mm/s.

13. Procédé selon au moins l'une quelconque des revendications 6 à 12, **caractérisé en ce que** la flamme du brûleur à gaz est placée au-dessus de la surface à activer de l'élément en plastique.

14. Procédé selon au moins l'une quelconque des revendications 6 à 13, **caractérisé en ce qu'**on utilise un brûleur à gaz avec une flamme ayant une section transversale ronde horizontale.

15. Procédé selon au moins l'une quelconque des revendications 6 à 14, dans lequel un bord en plastique est fixé avec une rainure venant en prise autour du bord supérieur du pot, **caractérisé en ce que** l'angle d'inclinaison du brûleur à gaz est choisi entre 0° et 15° par rapport à la perpendiculaire à la surface de base de la rainure.

16. Procédé selon la revendication 15, **caractérisé en ce que** seulement la surface de base et la surface latérale extérieure de la rainure sont enflammées.

17. Procédé selon au moins l'une quelconque des revendications 6 à 16, **caractérisé en ce que** l'élément en plastique est soumis à un traitement ultérieur immédiatement après l'inflammation.

18. Procédé selon au moins l'une quelconque des revendications 6 à 17, **caractérisé en ce que** l'élément en plastique est collé après l'inflammation sans utiliser de promoteur d'adhésion chimique supplémentaire (primer).

19. Pot en verre avec des éléments en plastique tels que des poignées et/ou des bords en plastique enserrant le bord supérieur de pots, avec ou sans bec verseur, **caractérisé en ce que** l'élément en plastique se compose de polypropylène activé en surface.
